# EUROPÄISCHE PATENTSCHRIFT

(11) **EP 0 407 795 B1**
(45) Veröffentlichungstag und Bekanntmachung des Hinweises auf die Patenterteilung: **15.09.1993**
(21) Anmeldenummer: 90112006.3
(22) Anmeldetag: 25.06.1990
(51) Int. Cl.: B07C 3/06, B65H 31/00, B65H 31/08, G06K 13/14

(54) **Vorrichtung zur Verbesserung der Stapelqualität von flachen Gegenständen**
Device for improving the stacking quality of flat items
Dispositif pour modifier la qualité d'empilement des objets plans

(30) Priorität: 05.07.1989 DE 3922045
(43) Veröffentlichungstag der Anmeldung: 16.01.1991
(73) Patentinhaber: Licentia Patent-Verwaltungs-GmbH, 60596 Frankfurt (DE)
(72) Erfinder: Bulle, Bernd, Dipl.-Ing., D-7753 Allensbach 1 (DE); Gillmann, Hanno, Dr. Ing., D-7750 Konstanz (DE); Zimmermann, Armin, Dipl.-Ing., D-7750 Konstanz (DE)
(74) Vertreter: Vogl, Leo, Dipl.-Ing.

(56) Entgegenhaltungen:
- EP-A- 0 077 251
- EP-A- 0 270 731
- DD-A- 118 739
- DE-A- 2 633 897
- DE-B- 1 807 179

## Beschreibung

Die vorliegende Erfindung betrifft eine Vorrichtung zur Führung, Stapelung und Aufnahme von flachen Gegenständen, wie z. B. Briefsendungen oder Postkarten, die von einem Transportsystem strangweise oder einzeln der Vorrichtung zugeführt werden.

Vorrichtungen dieser Art sind aus der europäischen Patentschrift 77251 bekannt und finden sich häufig am Ausgang von Postsortieranlagen. Bei diesen Systemen werden Briefsendungen und ähnliches mit geeigneten Transportsystemen wie z. B. Deckbändern, mit einer hohen Zuführungsgeschwindigkeit Empfangs- bzw. Stapelfächern über Weichen zur Wegleitung vom Transportsystem zugeführt und dort abgestapelt. Nicht maschinenfähige Sendungen werden in einer vorgeschalteten Meßstrecke erkannt und ausgeschleust. Systeme dieser Art sollen in der Lage sein, ein möglichst breites Spektrum unterschiedlicher Sendungen zu verarbeiten, wobei das bei den ausgangsseitig angeordneten, gattungsgemäßen Vorrichtungen auftretende Problem ist, daß sich die Unterschiedlichkeit der Parameter wie Größe, Gewicht und Oberflächenbeschaffenheit der Sendungen negativ auf die Stapelqualität und die störungsfreie zeitliche Aufnahmekapazität der Stapelfächer auswirken kann.

Bekannt sind bisher schon Vorrichtungen, die aus Kästen oder Körben bestehen, bei denen Briefsendungen unmittelbar am Ausgang des Transportsystems von einem Pendel übernommen werden, daß sie bremst und zum Boden des zur Bildung eines Stapels geeigneten Korbes oder Kasten führt, dessen Gelenkpunkt mit einer Klappe oder Weiche verbunden ist.

Dabei auftretende Probleme beziehen sich vor allen Dingen auf eine mögliche elektrostatische Aufladung der Briefsendungen, sowie auf eine Verstopfung des Faches durch Sendungen, bei denen die Sendungsvorderkante auf die Hinterkante von vorher abgelegten Sendungen aufgelaufen ist.

Ein weiteres bei der Verwendung von Pendeln oder Führungsbügeln autretendes Problem ist, daß mit wachsender Stapelhöhe sich der Abstand zwischen der Prallwand, an der die Sendungen mit ihrer Vorderkante anliegen und dem Druckpunkt des Führungsbügels vermindert, so daß insbesondere steife Sendungen vor die Stapelvorderkante gelangen und sich aufstellen können. Andererseits führt ein kürzerer Führungsbügel zu einem größeren Auftreffwinkel und damit zu einem höheren Stoßenergieverlust.

Ein zusätzliches Problem besteht darin, daß bei Stapelfächern, die für eine bessere Entnahme des Sendungsstapels an der Vorderseite offen sind, wenn die Sendungen nicht mit einer Kante an der Rückwand anliegen, neben einer schlechten Stapelqualität die Gefahr des Herausfallens der Sendungen aus dem Fach besteht.

Aus der Europäischen Patentanmeldung 0 270 731 ist bereits eine Vorrichtung gemäß dem Oberbegriff des Patent-anspruchs 1 bekannt, bei der jedoch bei wachsender Stapelhöhe die erwähnten Probleme auftreten können. Aus der DE-OS 26 33 897 ist auch bereits eine Blattstapelvorrichtung bekannt, bei der die Stapelfläche, auf die die zu stapelnden Sendungen aufgebracht werden, eine gegenüber der Horizontalen fest vorgegebene Neigung besitzt.

Die vorliegende Erfindung geht von der Erkenntnis aus, daß ein möglichst schnelles Stapeln solcher flachen Sendungen zunächst einmal einen spitzen Auftreffwinkel der Sendungen auf den Stapel erfordert, damit ein geringer Stoßenergieverlust und ein sicherer und schneller Transport der Sendungen zur Prallwand des Stapelfaches erreicht wird.

Andererseits ist zum rechtzeitigen Ablegen der Sendungshinterkanten im oberen Stapelbereich und zum störungsfreien Entleeren des vollen Stapelfaches ein Mindestauftreffwinkel notwendig, der auch bei der maximal vorgesehenen Stapelhöhe im Stapelfach nicht unterschritten werden soll.

Die Gesamtaufgabe der Erfindung besteht darin, eine optimale Orientierung und Position des Stapels innerhalb des Stapelfaches sowie gegenüber neueinlaufenden Sendungen, eine Verminderung der Gefahr des Herausfallens der Sendungen aus dem Stapelfach, eine Verbesserung der Stapelqualität, eine Vereinfachung der Handhabung bei der Entnahme des Sendungsstapels sowie eine sichere Signalisierung des Füllstandes und von Verstopfungen des Faches zu erreichen.

Insbesondere ist es eine Aufgabe der vorliegenden Erfindung, ein Stapel- oder Aufnahmefach anzugeben, das durch Gestaltung der inneren Geometrie des Faches und der Fachwände ermöglicht, den Auftreffwinkel der Sendungen in dem oben angegebenen günstigen Bereich zu halten. Eine weitere Aufgabe der Erfindung besteht darin, eine solche innere Geometrie des Stapelfaches anzugeben, daß die Sendungen bei der Aufnahme immer zur Rückwand hinorientiert werden und dadurch die Möglichkeit des Herausfallens der Sendungen aus dem Fach erheblich verringert und die Stapelqualität verbessert wird. Daneben ist es auch eine Aufgabe der Erfindung, einen solchen Führungsbügel zur Führung der Sendungen vom Ausgang des Transportsystems in das Innere des Stapelbehälters anzugeben, bei dem durch Form und Dimensionierung gewährleistet ist, daß die Haftreibungskräfte zwischen Führungsbügel und Sendungen minimiert werden und der Auftreffwinkel der Sendungen auf den Stapel im optimalen Bereich gehalten werden kann.

Die Aufgabe wird erfindungsgemäß durch die Merkmale des Anspruchs 1 gelöst. Weitere vorteilhafte Ausgestaltungen der Erfindung sind in den Unteransprüchen 2 - 11 beschrieben.

Vorteile der erfindungsgemäßen Lösung sind die Erreichung optimaler Stapelqualität in Verbindung mit minimaler Störungsrate, die Verhinderung von Verstopfungen, insbesondere im oberen Stapelbereich und bei der Fachentleerung, eine Verhinderung des Herausfallens von Sendungen sowie eine sichere Erfassung des Füllstandes bei fast vollem oder vollem Stapelfach, auch bei unterschiedlichen Stapelformen.

Im folgenden wird die Erfindung unter Bezugnahme auf Zeichnungen genauer erläutert. Im einzelnen zeigen die Zeichnungen:
- Figur 1:: eine Vorderansicht einer erfindungsgemäßen Vorrichtung
- Figur 2:: einen Querschnitt von oben einer erfindungsgemäßen Vorrichtung

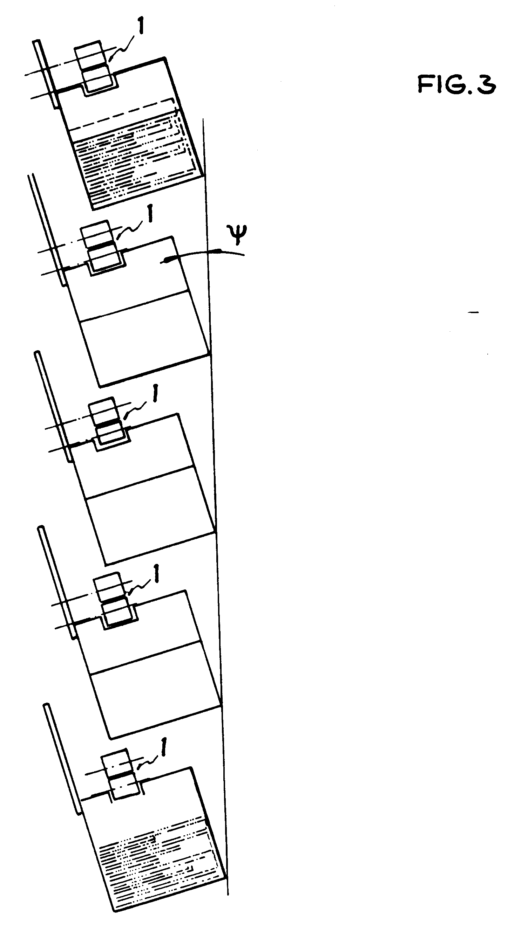

- Figur 3:: die Seitenansicht eines Systems von fünf senkrecht übereinander angeordneten Reihen von erfindungsgemäßen Vorrichtungen.

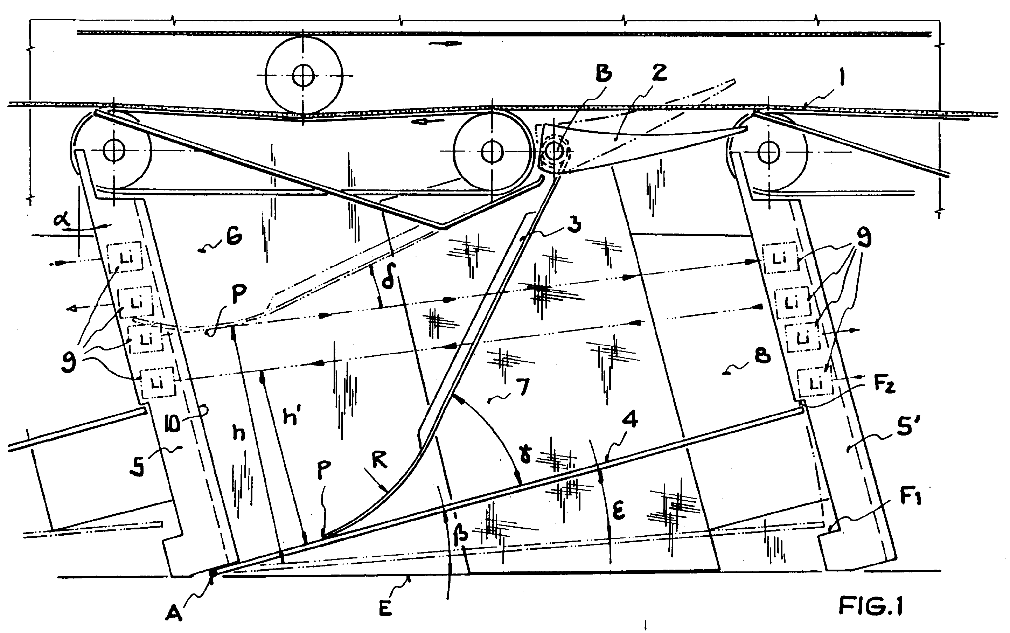

In Figur 1 ist eine erfindungsgemäße Vorrichtung in Vorderansicht gezeigt, bei der Sendungen über ein System von Deckbändern (1) bei geöffneter Weiche (2) in den Innenraum eines Stapel- bzw. Aufnahmefachs gelenkt werden.

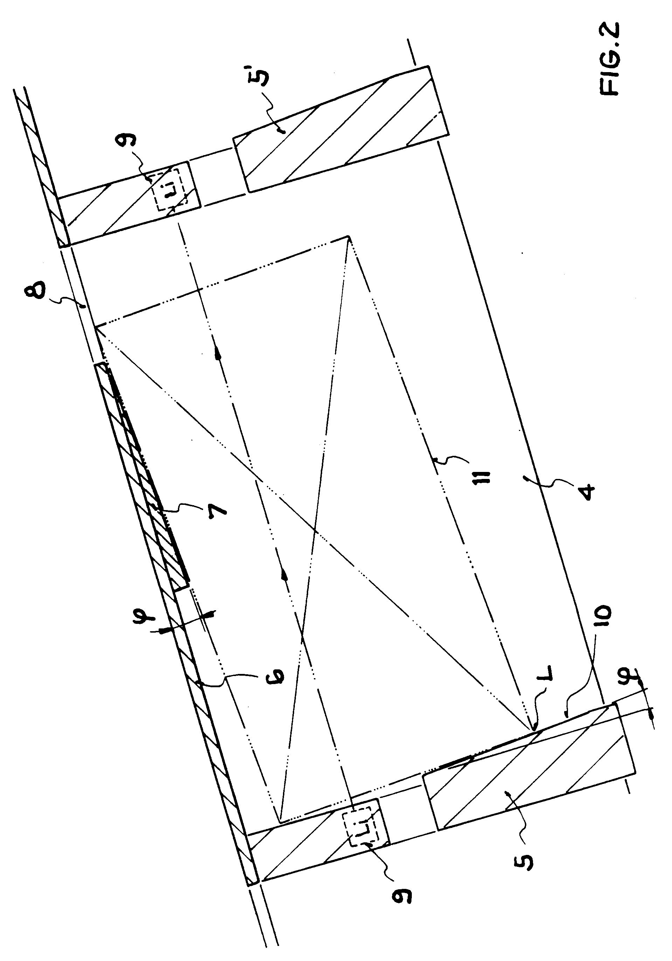

Dabei gleitet eine Sendung am Führungsbügel (3) entlang auf den Stapelboden (4) bzw. bei bereits vorher eingestapelten Sendungen auf den Stapel. Nach dem Auftreffen der Sendungsvorderkante auf die Prallwand (5) legt sich die Sendungshinterkante durch die wirkende Schwerkraft auf den Stapel ab. Die Prallwand (5) ist um den Winkel α gegenüber der Lotrechten geneigt, wodurch der Gleitweg der Sendung auf dem Stapel bei geringer Stapelhöhe verkürzt ist gegenüber dem Weg bei größerer Stapelhöhe. Der Stapelboden (4) ist gegenüber einer Ebene E, die senkrecht zur Lotrechten angeordnet ist, um den Winkel β geneigt. Die Rückwand (6) weist eine Erhöhung (7) auf, die in Zusammenhang mit der Figur 2 genauer charakterisiert wird sowie einen Durchbruch (8), um die beim Ablegen der Sendungshinterkante zu verdrängende Luft nach vorn und hinten entweichen zu lassen. Der Stapelboden (4) ist um eine Drehachse (A) um den Winkel ε drehbar, wobei die Extremlagen des Stapelbodens (4) dadurch festgelegt werden können, daß in der Wand (5'), die im wesentlichen parallel zur Wand (5) angeordnet ist, eine Aussparung mit Auflageflächen (F1) und (F2) vorgesehen ist. Der Führungsbügel (3) ist um eine Achse (B) drehbar, die mit der Drehachse der Weiche (2) zusammenfallen kann.

In einem ersten Abschnitt nahe der Drehachse (B) ist der Führungsbügel (3) im wesentlichen linear geformt und weist in seinem Endteil, d. h., vom Drehpunkt (B) weiter entfernten Teil (R) eine Krümmung in entgegensetzter Richtung zum Stapelboden auf. Die in Kontakt mit den Briefsendungen tretende Oberfläche des Führungsbügels (3) ist vorteilhafterweise als Profil ausgebildet, so daß die Briefsendungen nur auf zwei schmalen Auflagekanten entlanggleiten. Durch diese Linienberührung wird die wirksame Fläche bei der elektrostatischen Aufladung minimiert.

Die Wände (5) und (5') der Vorrichtung weisen zwei übereinander angeordnete Einweg-Lichtschranken (9) auf, die die Füllstände "Fast voll" bzw. "Voll" signalisieren.

Der Schaltzustand "Fast voll" führt zu einer Entleerungsaufforderung für das Bedienpersonal.

Beim Schaltzustand "Voll" wird die Weiche verriegelt, d. h., in dieses Fach gelangen keine Sendungen, solange dieser Schaltzustand aufrechterhalten bleibt.

Erreicht wird dieser Schaltzustand durch den Füllzustand "Voll", auch bei konischen Stapeln oder durch eine Verstopfung im Fach, d. h., dem Auffahren einer Sendung auf die Hinterkante der vorauslaufenden Sendung.

Bei verriegelter Weiche bleibt eine eventuelle Verstopfung eines Faches auf dieses Fach begrenzt und kann sich nicht in das Deckbandsystem fortsetzen.

Sender und Empfänger der Lichtschranken (9) sind wechselseitig angeordnet, um zu verhindern, daß ein Sender, bedingt durch den Öffnungswinkel seiner Lichtkeule, beide Empfänger schaltet.

Figur 2 zeigt einen horizontalen Querschnitt durch die erfindungsgemäße Vorrichtung. Die Prallwand (5) weist in dem von der Rückwand (6) abgewandten Bereich einen ins Innere des Stapelfaches ragenden Vorsprung (10) auf, so daß die Wand (5) in diesen Bereich um den Winkel 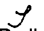 gegenüber der Senkrechten auf der Rückwand (6) geneigt ist. Die Rückwand (6) weist in einen von der Prallwand (5) entfernten Bereich eine Erhöhung (7) auf.

Beim Einstapeln stützen sich die Sendungen auf der Längskante an der Erhöhung (7) ab und gleiten an dieser durch die Schwerkraft auf den Stapel. Die Sendungen (11) treffen mit ihrer vorderen Ecke L zuerst auf die Prallwand auf. Dadurch wird ein Moment auf die Sendungen ausgeübt, so daß sich diese immer zur Rückwand (6) hinorientieren, mit ihrer Längskante an der Erhöhung (7) zum Anliegen kommen, die Stapelqualität verbessert und die Möglichkeit des Herausfallens der Sendungen aus dem Stapelfach erheblich verringert wird.

Mit der in Figur 1 und 2 dargestellten Vorrichtung werden flache Gegenstände wie Briefsendungen in folgender Weise gestapelt: Durch das Deckband-System (1) zur geöffneten Weiche (2) transportierte Sendungen gleiten am oberen Teil des Führungshebels (3) herab in Richtung auf den Stapelboden. Die Sendungen treffen mit einem spitzen Winkel γ auf vorher eingestapelte Sendungen oder auf den Stapelboden, der in diesem Fall und bei geringer Stapelhohe um den Winkel β gegenüber der Ebene E gedreht ist.

Beim Einstapeln stoßen die Sendungen auf die Prallwand (5). Um die Haftkräfte der Sendungen am Führungsbügel (3) zu minimieren, weist dieser die oben beschriebene Ausführung als Profil auf. Durch diese Maßnahme und durch den spitzen Auftreffwinkel γ wird ein geringer Stoßenergieverlust erreicht, was vor allem bei Sendungen mit geringer kinetischer Energie und rauher Papieroberfläche erforderlich ist, um zu gewährleisten, daß die Sendungen mit ihrer Vorderkante an der Prallwand (5) anliegen. Mit zunehmender Stapelhöhe vermindert sich der Auftreffwinkel γ der Sendungen auf den Stapel.

Zum rechtzeitigen Ablegen der Sendungshinterkanten im oberen Stapelbereich und zum störungsfreien Entleeren des vollen Faches ist jedoch ein Mindestauftreffwinkel δ notwendig. Um diesen auch bei der maximalen Stapelhöhe h einzuhalten, wird bei Erreichen einer Stapelhöhe h' oder eines vorgegebenen Stapelgewichtes der Stapelboden (4) um die Achse (A) nach unten um den maximalen Winkel ε gedreht. Diese Drehung des Stapelbodens stellt sicher, daß die Briefschwänze im oberen kritischen Einlaufbereich bei fast vollem Stapelfach einen ausreichend großen Freiraum zum Ablegen zur Verfügung haben.

Durch diese Maßnahme wird die Gefahr des Auflaufens der Sendungsvorderkante einer Sendung auf die Hinterkante der vorher abgelegten Sendung bei größerer Stapelhöhe stark verringert und die Entnahme des Stapels aus dem Stapelfach erleichtert.

Neben der Verminderung der Haftkräfte an der kritischen Gleitfläche des Führungsbügels (3) wird durch die Krümmung im Bereich R des Führungsbügels (3) ein annähernd konstanter Abstand zwischen der Prallwand (5) und dem Druckpunkt P, bei dem das Gewicht des Führungsbügels (3) auf dem Stapel aufliegt, erreicht. Ein ausreichender Abstand zwischen Prallwand (5) und Druckpunkt P ist erforderlich um zu verhindern, daß steife Sendungen vor die Stapelvorderkante gelangen und sich aufstellen. Mit wachsender Stapelhöhe wandert der Druckpunkt P entlang des gekrümmten Teils des Führungsbügels (3) von der Spitze in Richtung auf den geraden Teil.

Vorzugsweise liegt die Kante der Erhöhung (7) so nahe dem Druckpunkt P, daß die Bewegung der Sendungshinterkante langer Sendungen nicht durch Reibungskräfte behindert wird und auch solche Sendungen somit schnell abgelegt werden können.

In Figur (3) ist ein System von fünf senkrecht übereinander angeordneten Reihen von erfindungsgemäßen Vorrichtungen gezeigt. Jede Fachreihe nebst Deckband-System ist um den Winkel 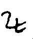 gegenüber der Senkrechten geneigt, und die äußeren unteren Kanten aller Stapelfächer liegen in einer vertikalen Ebene.

Der vertikale Gesamtaufbau dieses Systems ermöglicht eine erhebliche Verbesserung der Ergonomie, da die Stapelfächer aller Reihen näher im Griffbereich des Bedienpersonals liegen. Durch die Neigung um den Winkel 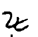 der Stapelfächer wird eine zusätzliche Orientierung der Sendungen auf die Rückwände der Stapelfächer bewirkt und damit ein Herausfallen der Sendungen aus den Fächern verhindert.

## Patentansprüche

1. Vorrichtung zur Führung und Aufnahme von flachen Gegenständen wie Briefsendungen in ein Stapelfach, wobei eine gegenüber der Horizontalen geneigte Stapelfläche (4) vorgesehen ist, deren Neigung so ist, daß zu stapelnde flache Gegenstände in einem Winkel, der größer als ein vorgegebener Minimalwinkel δ und kleiner als ein Maximalwinkel γ ist, auf die den Boden des Stapels bildende Stapelfläche (4) oder den Stapel bereits gestapelter flacher Gegenstände auftreffen, **dadurch gekennzeichnet**, daß die Stapelfläche (4) um eine Achse (A) drehbar ist und daß bei Erreichen einer gewissen Stapelhöhe h' oder eines vorgzgebenen Stapelgewichts der Stapelboden (4) um die Achse (A) nach unten um einen maximalen Winkel ε gedreht wird.

2. Vorrichtung nach Anspruch 1, dadurch gekennzeichnet, daß bei Erreichen einer vorgegebenen Stapelhöhe h oder eines vorgegebenen Stapelgewichts, die Neigung der Stapelfläche (4) gegenüber der Horizontalen vermindert wird.

3. Vorrichtung nach Anspruch 1 oder 2, dadurch gekennzeichnet, daß eine um den Winkel (α) gegenüber der Lotrechten geneigte Prallwand (5) vorgesehen ist und daß die Prallwand (5) so geformt ist, daß die flachen Gegenstände bei ihrem Auftreffen auf die Prallwand ein auf die Rückwand (6) des Stapelfaches gerichtetes Moment erhalten.

4. Vorrichtung nach Anspruch 1 bis 3, dadurch gekennzeichnet, daß in der Nähe der Eingangsöffnung ein Führungsbügel (3) vorgesehen ist, der von seiner Drehachse (B) aus gerechnet einen ersten linear gestreckten Bereich und einen zweiten von der Stapelflache (4) weggekrümmten Endbereich aufweist, so daß die Haftkräfte auf entlang des Führungsbügels (3) gleitenden flachen Gegenstände minimiert werden.

5. Vorrichtung nach Ansprüchen 1 bis 4, dadurch gekennzeichnet, daß die Prallwand (5) zumindest in einem von der Rückwand (6) entfernten Bereich eine Erhöhung (10) aufweist, so daß zu stapelnde flache Gegenstände zuerst mit ihrem vorderen, der Rückwand (6) abgewandten Bereich auftreffen und gegen die Rückwand (6) hinorientiert werden.

6. Vorrichtung nach Anspruch 5, dadurch gekennzeichnet, daß die Erhöhung der Prallwand (5) als ebene Fläche ausgebildet ist, die um einen Winkel 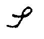 gegenüber der Senkrechten auf der Rückwand (6) geneigt ist.

7. Vorrichtung nach einem der Ansprüche 1 bis 6, dadurch gekennzeichnet, daß die Rückwand eine Erhöhung (7) aufweist, so daß einzustapelnde flache Gegenstände beim Hineingleiten in das Stapelfach sich auf der Längskante an der Erhöhung (7) abstützen.

8. Vorrichtung nach einem der Ansprüche 1 bis 7, dadurch gekennzeichnet, daß der Druckpunkt P des Führungsbügels (3) auf den Stapel einen ausreichenden Abstand von der Prallwand (5) aufweist, so daß flache Gegenstande mit erhöhter Steifheit nicht zwischen Prallwand (5) und Stapelvorderseite gleiten können.

9. Vorrichtung nach dem Anspruch 7, dadurch gekennzeichnet, daß die Erhöhung (7) eine Kante aufweist, die in einem solchen Abstand zum Druckpunkt P des Führungsbügels (3) liegt, daß die Hinterkanten längerer Sendungen nicht durch Reibungskräfte behindert werden.

10. Vorrichtung nach einem der Ansprüche 1 bis 9, dadurch gekennzeichnet, daß in der Rückwand (6) mindestens ein Durchbruch für das Entweichen von durch die Sendungen zu verdrängende Luft vorgesehen ist.

11. Vorrichtung nach einem der Ansprüche 1 bis 10, dadurch gekennzeichnet, daß Lichtschranken (9) an der Prallwand (5) und der entgegengesetzten Wand (5') jedes Stapelfaches angeordnet sind, die den Füllstand des Stapelfachs über die gesamte Länge des Fachs abtasten und den Füllstand signalisieren sowie eine Verstopfungsüberwachung des Stapelfachs realisieren.

12. Sortieranlage für flache Gegenstände, dadurch gekennzeichnet, daß sie mindestens eine Vorrichtung nach einem der vorhergehenden Ansprüche aufweist.

13. Sortieranlage nach Anspruch 12, dadurch gekennzeichnet, daß eine Vielzahl von Vorrichtungen nach einem der Ansprüche 1 bis 11 vorgesehen ist, die in Reihen angeordnet und miteinander so verbunden sind, daß die Prallwand (5) eines ersten Stapelfaches, die der Prallwand eines zweiten Stapelfaches entgegengesetzte Wand (5') bildet.

14. Sortieranlage nach Anspruch 13, dadurch gekennzeichnet, daß die Reihen in Ebenen vertikal übereinander angeordnet sind, daß jede Reihe um einen Winkel 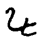 gegenüber der Lotrechten geneigt und die unteren äußeren Kanten aller Stapelfächer in einer vertikalen Ebene liegen.

## Claims

1. Device for the guidance and reception of flat articles such as letter consignments in a stacking compartment, wherein a stacking surface (4) is provided, which is inclined relative to the horizontal and the inclination of which is such that flat articles to be stacked impinge on the stacking surface (4), which forms the base of the stack, or on the stack of already stacked flat articles at an angle which is greater than a preset minimum angle δ and smaller than a maximum angle γ, characterised thereby, that the stacking surface (4) is rotatable about an axis (A) and that the stacking surface (4) is rotated downwardly through a maximum angle ε about the axis (A) on a certain stack height h' or a preset stack weight being reached.

2. Device according to claim 1, characterised thereby, that the inclination of the stacking surface (4) relative to the horizontal is reduced on a preset stack height h or a preset stack weight being reached.

3. Device according to claim 1 or 2, characterised thereby, that a baffle wall (5) is provided, which is inclined relative to the vertical by the angle (α), and that the baffle wall (5) is so shaped that the flat articles on their impinging on the baffle wall (5) receive a moment directed towards the rear wall (6) of the stacking compartment.

4. Device according to the claims 1 to 3, characterised thereby, that a guide bracket (3), which - reckoned from its rotational axle (B) - displays a first linear straight region and a second end region curved away from the stacking surface (4), is provided in the proximity of the entry opening so that the adhesion forces of flat articles sliding along the guide bracket (3) are minimised.

5. Device according to the claims 1 to 4, characterised thereby, that the baffle wall (5) at least in a region remote from the rear wall (6) displays a protrusion (10) so that flat articles to be stacked impinge initially by their forward region remote from the rear wall (6) and are oriented towards the rear wall (6).

6. Device according to claim 5, characterised thereby, that the protrusion of the rear wall (6) is formed as planar surface which is inclined relative to the normal onto the rear wall (6) through an angle 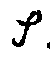

7. Device according to one of the claims 1 to 6, characterised thereby, that the rear wall (6) displays a protrusion (7) so that flat articles, which are to be stacked in, bear against the protrusion (7) on the longitudinal edge on sliding into the stacking compartment.

8. Device according to one of the claims 1 to 7, characterised thereby, that the pressure point P of the guide bracket (3) onto the stack displays an adequate spacing from the baffle wall (5) so that flat articles of greater stiffness cannot slide between the baffle wall (5) and the front side of the stack.

9. Device according to claim 7, characterised thereby, that the protrusion (7) displays an edge which lies at such a spacing from the pressure point P of the guide bracket (3) that the rear edges of longer consignments are not hindered by friction forces.

10. Device according to one of the claims 1 to 9, characterised thereby, that at least one passage is provided in the rear wall (6) for the escape of air to be displaced by the consignments.

11. Device according to one of the claims 1 to 10, characterised thereby, that light barriers (9) are provided at the baffle wall (5) and the opposite wall (5') of each stacking compartment, scan the state of filling of the stacking compartment over its entire length and signal the state of filling as well as realise a monitoring for choking of the stacking compartment.

12. Sorting plant for flat articles, characterised thereby, that it comprises at least one device according to one of the preceding claims.

13. Sorting plant according to claim 12, characterised thereby, that a plurality of devices according to one of the claims 1 to 11 is provided, which are arranged in rows and so connected one with the other that the baffle wall (5) of a first stacking compartment forms the wall (5') opposite the baffle wall of a second stacking compartment.

14. Sorting plant according to claim 13, characterised thereby, that the rows are arranged one vertically above the other in planes, that each row is inclined relative to the vertical by an angle 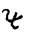 and the lower outer edges of all stacking compartments lie in one vertical plane.

## Revendications

1. Dispositif destiné à guider et à recevoir des objets plats tels que des lettres d'envoi, dans une case d'empilage, une surface d'empilage (4) inclinée par rapport à l'horizontale, étant prévue, son inclinaison étant telle, que des objets plats devant être empilés parviennent sur la surface d'empilage (4) formant la base de la pile ou sur la pile d'objets plats déjà empilés, sous un angle qui est supérieur à un angle minimum δ prédéterminé, et inférieur à un angle maximal γ caractérisé en ce que la surface d'empilage (4) peut tourner autour d'un axe (A), et en ce que lorsqu'on atteint une certaine hauteur de pile (h') ou un poids de pile prédéterminé, la base d'empilage (4) est tournée vers le bas autour de l'axe (A), d'un angle maximal ε.

2. Dispositif selon la revendication 1, caractérisé en ce lorsqu'on atteint une hauteur de pile h prédéterminée, ou un poids de pile prédéterminé, l'inclinaison de la surface d'empilage (4) est réduite par rapport à l'horizontale.

3. Dispositif selon la revendication 1 ou 2, caractérisé en ce qu'est prévue une paroi d'impact (5) inclinée de l'angle (α) par rapport à la verticale, et en ce que la paroi d'impact (5) présente une forme telle, que les objets plats, lors de leur impact sur la paroi d'impact, subissent un moment dirigé vers la paroi arrière (6) de la case d'empilage.

4. Dispositif selon les revendications 1 à 3, caractérisé en ce qu'à proximité de l'ouverture d'entrée est prévu un étrier de guidage (3), qui à partir de son axe de rotation (B), présente une première zone allongée linéaire et une seconde zone d'extrémité courbée de manière à s'éloigner de la surface d'empilage (4), de sorte que les forces d'adhérence sur des objets plats glissant le long de l'étrier de guidage (3) sont minimisées.

5. Dispositif selon les revendications 1 à 4, caractérisé en ce que la paroi d'impact (5) comporte, au moins dans une zone éloignée de la paroi arrière (6), une surépaisseur (10), de sorte que des objets plats à empiler la rencontrent en premier lieu avec leur zone avant éloignée de la paroi arrière (6), et sont orientés en direction de la paroi arrière (6).

6. Dispositif selon la revendication 5, caractérisé en ce que la surépaisseur de la paroi d'impact (5) est réalisée sous la forme d'une surface plane, qui est inclinée d'un angle (φ) par rapport à la perpendiculaire à la paroi arrière (6).

7. Dispositif selon l'une des revendications 1 à 6, caractérisé en que la paroi arrière comporte une surépaisseur (7), de sorte que des objets plats à empiler, lors de leur entrée en glissant dans la case d'empilage, s'appuient le long de leur bord longitudinal, sur la surépaisseur (7).

8. Dispositif selon l'une des revendications 1 à 7, caractérisé en ce que le point de pression (P) de l'étrier de guidage (3) sur la pile, présente une distance suffisante de la paroi d'impact (5), pour que des objets plats de rigidité plus élevée ne peuvent glisser entre la paroi d'impact (5) et le côté avant de la pile.

9. Dispositif selon la revendication 7, caractérisé en ce que la surépaisseur (7) présente un bord qui se situe à une distance telle du point de pression (P) de l'étrier de guidage (3), que les bords arrière d'envois plus longs ne soient pas gênés par des forces de friction.

10. Dispositif selon l'une des revendications 1 à 9, caractérisé en ce que dans la paroi arrière (6) est prévu au moins une ouverture de passage pour l'évacuation de l'air devant être déplacé par les envois.

11. Dispositif selon l'une des revendications 1 à 10, caractérisé en ce que sur la paroi d'impact (5) et sur la paroi (5') opposée de chaque case d'empilage, sont disposés des éléments de barrières photoélectriques (9), qui détectent le niveau de remplissage de la case d'empilage sur toute la longueur de la case d'empilage et signalent ce niveau de remplissage, tout en réalisant un contrôle de bourrage de la case d'empilage.

12. Installation de tri pour objets plats, caractérisée en ce qu'elle comporte au moins un dispositif selon l'une des revendications précédentes.

13. Installation de tri selon la revendication 12, caractérisée en ce que sont prévus un grand nombre de dispositifs selon l'une des revendications 1 à 11, qui sont disposés en rangées et sont reliés entre-eux de manière à ce que la paroi d'impact (5) d'une première case d'empilage forme la paroi (5') opposée à la paroi d'impact d'une seconde case d'empilage.

14. Installation de tri selon la revendication 13, caractérisée en ce que les rangées sont disposées dans des plans en étant superposées verticalement, en ce que chaque rangée est inclinée d'un angle par rapport à la verticale, et en ce que les bords inférieurs extérieurs de toutes les cases d'empilage se situent dans un plan vertical.
